# EUROPEAN PATENT SPECIFICATION

(11) **EP 3 364 078 B1**
(45) Date of publication and mention of the grant of the patent: **20.11.2019**
(21) Application number: 16855323.8
(22) Date of filing: 05.10.2016
(51) Int. Cl.: F16J 15/18, F16J 15/3272, F16J 15/34

(54) **SEAL RING**
DICHTUNGSRING
BAGUE D'ÉTANCHÉITÉ

(30) Priority: 16.10.2015 JP 2015204244
(43) Date of publication of application: 22.08.2018
(73) Proprietor: Kabushiki Kaisha Riken, Chiyoda-ku, Tokyo 102-8202 (JP)
(72) Inventor: OHYA, Naohisa, Kashiwazaki-shi Niigata 945-8555 (JP); HIRAYAMA, Daisuke, Kashiwazaki-shi Niigata 945-8555 (JP); KAWASAKI, Takahiro, Kashiwazaki-shi Niigata 945-8555 (JP)
(74) Representative: Markfort, Iris-Anne Lucie
(86) International application number: PCT/JP2016/079624
(87) International publication number: WO 2017/065069

(56) References cited:
- CN-A- 1 828 098
- JP-A- H08 159 295
- JP-A- H09 210 211
- JP-A- 2008 151 201
- JP-U- H0 618 764
- US-A1- 2015 123 350

## Description

### Technical Field

The present invention relates to a seal ring that can be used for a hydraulic machine and the like.

### Background Art

There are known automobiles equipped with various hydraulic machines such as hydraulic-type automatic transmissions. In those automobiles, there is a demand for reduction in drive loss of the hydraulic machines so as to improve fuel efficiency.

Seal rings are used for the hydraulic-type automatic transmissions. The seal ring is fitted into a groove of a shaft inserted into a housing, and seals a gap between the housing and the shaft. During driving of the automatic transmission, a friction loss is caused between that seal ring and the shaft due to its rotation relative to the shaft.

Such a friction loss results in drive loss of the hydraulic machine. Therefore, a technology for reducing the friction loss is desirable. Patent Literatures 1 to 5 have disclosed technologies for reducing the friction loss caused between the seal ring and the shaft. The seal rings disclosed by those literatures each include pockets formed in side surfaces that are contact surfaces with the groove of the shaft.

When oil pressure is applied on that seal ring, oil enters the pocket. The oil entering the pocket adds canceling pressure to lower pressure applied on the groove of the shaft from the seal ring. With this, the friction between the seal ring and the shaft is reduced, and the friction loss caused between the seal ring and the shaft is thus reduced.

### Citation List

### Patent Literature

Patent Literature 1: WO 2011/105513
Patent Literature 2: WO 2004/090390
Patent Literature 3: WO 2011/162283
Patent Literature 4: WO 2013/094654
Patent Literature 5: WO 2013/094657
Patent Literature 6: JP H08 159295 A
Patent Literature 7: US 2015/123350 A1
Patent Literature 8: CN 1 828 098 A

### Disclosure of Invention

### Technical Problem

In the above-mentioned technologies, the oil entering the pocket of the seal ring flows into a gap between the seal ring and the shaft and forms an oil film between the seal ring and the shaft. Such oil film formation enhances a lubrication property of the seal ring, and the friction loss is reduced. However, if the oil film is too thick, the oil easily leaks out of the seal ring. Thus, the relationship between the friction loss and the oil leakage easily becomes a trade-off relationship.

In view of the above-mentioned circumstances, it is an object of the present invention to provide a seal ring capable of both reducing the friction loss and reducing the oil leakage.

### Solution to Problem

In order to accomplish the above-mentioned object, a seal ring according to an embodiment of the present invention includes: an inner circumferential surface, an outer circumferential surface, side surfaces, a plurality of pockets, and recess regions.

The outer circumferential surface is opposed to the inner circumferential surface.

The side surfaces are orthogonal to the inner circumferential surface and the outer circumferential surface.

The plurality of pockets are provided, spaced apart from one another in at least one of the side surfaces.

The recess regions are provided in the at least one of the side surfaces and includes a plurality of independent recesses.

When oil pressure is applied on this seal ring, oil enters the pocket. The oil entering the pocket adds canceling pressure to lower pressure applied on the groove of the shaft from the seal ring. With this, the friction between the seal ring and the shaft is reduced, and the friction loss caused between the seal ring and the shaft is thus reduced.

Further, part of the oil inside the pocket enters a region between adjacent pockets and forms an oil film on the side surface. In this seal ring, the recess regions are provided in the side surface and the oil is retained in the recesses of the recess regions. The recess regions have a function of buffering oil and keeping the thickness of the oil film on the side surface suitable.

That is, in this seal ring, even if a small amount of oil enters the side surface, oil in the recesses of the recess regions is discharged, and hence the oil film on the side surface does not become too thin. Further, in this seal ring, even if a large amount of oil enters the side surface, the oil is caught in the recesses of the recess regions, and hence the oil film on the side surface does not become too thick.

Further, each of the plurality of pockets is opened on a side of the inner circumferential surface and closed on a side of the outer circumferential surface.

Further, in this seal ring, each pocket is closed on the side of the outer circumferential surface. Therefore, the oil entering the pocket hardly leaks toward the outer circumferential surface. Further, each pocket is opened on the side of the inner circumferential surface. Therefore, it is possible to prevent the oil pressure inside the pocket from being excessively high. With them, the oil leakage is reduced.

Also, each of the recess regions may be arranged between the plurality of pockets.

In this seal ring, each of the recess regions is provided in a region between the pockets and oil passing the pockets is easily caught in the recess regions. With this, the action of buffering oil at the recess regions can be more favorably obtained.

In this manner, in this seal ring, it is possible to both reduce the friction loss and reduce the oil leakage.

The seal ring may further include flat portions each provided on a side of the outer circumferential surface with respect to the recess regions, the recesses being not provided in the flat portions.

In this seal ring, the recesses that retain oil are not provided on the side of the outer circumferential surface, and hence it is possible to prevent oil from leaking outside the outer circumferential surface.

The seal ring may further include a joint portion.

The recesses do not need to be provided at the joint portion.

In this seal ring, due to the provision of the joint portion, easy mounting in the groove of the shaft becomes possible. Further, although the oil leakage easily occurs at the joint portion, the oil leakage can be reduced because the recesses are not provided at the joint portion.

Each of the recesses may be a circular hole having a diameter of 10 µm or more and 1 mm or less and a depth of 10 µm or more, the depth being equal to or smaller than a depth of the pocket.

With this configuration, the recess regions capable of more suitably buffering oil are obtained.

Further, each of the plurality of pockets may include a bottom portion provided at a central region in a circumferential direction, both end portions in the circumferential direction, which are R-surfaces each having a convex shape and connecting to the at least one of the side surfaces, and inclined portions each extending between the bottom portion and each of the both end portions.

In this seal ring, by causing the oil pressure inside the pocket to act on the inclined portions, canceling pressure to lower pressure applied on the groove of the shaft from the seal ring can be more effectively obtained. Further, due to the action of the end portions that are R-surfaces each having a convex shape, an adequate oil film is formed between the side surface of the seal ring and the groove of the shaft. Therefore, the friction loss can be more effectively reduced. Advantageous Effects of Invention

It is possible to provide a seal ring capable of both reducing the friction loss and reducing the oil leakage.

### Brief Description of Drawings

[Fig. 1] A plan view of a seal ring according to an embodiment of the present invention.
[Fig. 2] A partial, perspective view of the seal ring.
[Fig. 3] A view partially showing an inner circumferential surface of the seal ring.
[Fig. 4] A partial, plan view showing a region P of the seal ring, which is shown in Fig. 1, in an enlarged state.
[Fig. 5] A partial, plan view showing a configuration example of a recess region of the seal ring.
[Fig. 6] A view showing a seal ring according to Modified Example 1.
[Fig. 7] A view showing a seal ring according to Modified Example 2.
[Fig. 8] A view showing a seal ring according to Comparative Example 1.
[Fig. 9] A graph showing results of friction-loss evaluation.
[Fig. 10] A graph showing results of oil-leakage evaluation.

### Mode(s) for Carrying Out the Invention

Hereinafter, an embodiment of the present invention will be described with reference to the drawings.

### 1. Seal Ring 1

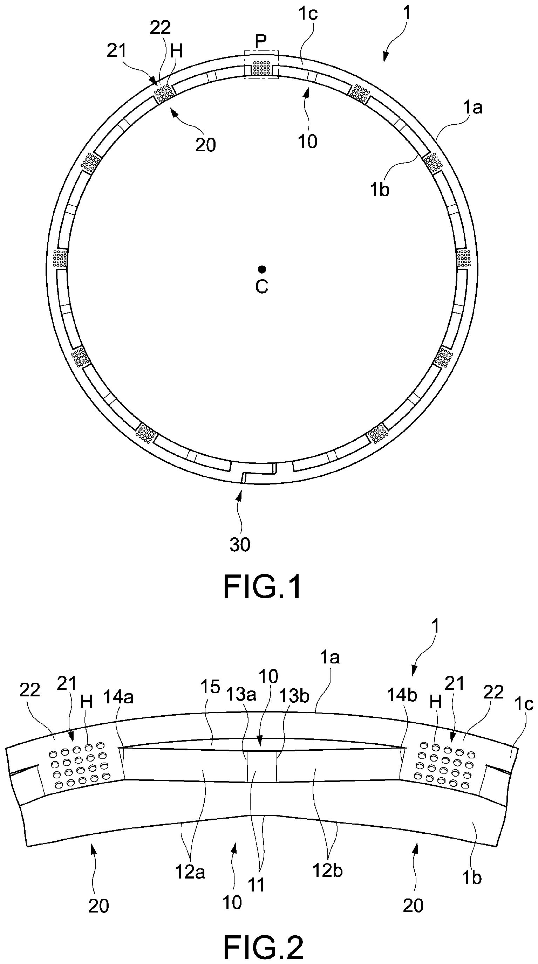

Fig. 1 is a plan view of a seal ring 1 according to an embodiment of the present invention. The seal ring 1 includes an outer circumferential surface 1a, an inner circumferential surface 1b, and side surfaces 1c. The seal ring 1 is formed in an annular shape having a central axis C as a center. The outer circumferential surface 1a and the inner circumferential surface 1b are cylindrical surfaces each having the central axis C as a center. The side surfaces 1c are flat surfaces orthogonal to the outer circumferential surface 1a and the inner circumferential surface 1b.

The seal ring 1 includes a plurality of pockets 10. The plurality of pockets 10 are arranged in the two side surfaces 1c, spaced apart from one another. Each pocket 10 is formed in a concave shape recessed from the side surface 1c. Further, the seal ring 1 includes column portions 20 arranged between the pockets 10. That is, in the seal ring 1, the pockets 10 and the column portions 20 are alternately arranged in a circumferential direction.

In the column portions 20 of the seal ring 1, there are provided recess regions 21. Each of the recess regions 21 has a configuration in which a plurality of recesses H recessed from the side surface 1c and independent from each other are arrayed. Further, flat portions 22 in which the recesses H are not formed are provided in regions of the side surface 1c, which are closer to the outer circumferential surface 1a than the recess regions 21. The recess regions 21 and the flat portions 22 will be described later in detail.

Further, the seal ring 1 is provided with a joint portion 30 in a manner that depends on needs. The joint portion 30 is for facilitating mounting on a shaft. Note that, in the present invention, the shape of the seal ring 1 with the joint portion 30 is defined as one in a state in which the joint portion 30 is closed.

Although not particularly limited, a well-known shape can be employed as the shape of the joint portion 30. For example, a right-angle (straight) joint, a diagonal (angle) joint, stepped (step) joint, a double angle joint, a double cut joint, or a triple stepped joint can be employed as the joint portion 30. In particular, with the double angle joint, the double cut joint, and the triple stepped joint, oil leakage from the joint portion 30 is well reduced.

The seal ring 1 is mounted in the groove of the shaft with the joint portion 30 being expanded. The shaft with the seal ring 1 mounted thereon is inserted into a housing with the outer circumferential surface 1a of the seal ring 1 slightly protruding from the groove. At this time, the outer circumferential surface 1a of the seal ring 1 is brought into contact with an inner circumferential surface of the housing. At the same time, the side surface 1c of the seal ring 1 is brought into contact with the groove of the shaft. Thus, the seal ring 1 seals a gap between the shaft and the housing.

The seal ring 1 is configured such that the pockets 10 are arranged in the groove of the shaft when it is mounted on the shaft and the housing. Therefore, the pockets 10 form spaces between the seal ring 1 and the groove of the shaft. In the seal ring 1, oil pressure of oil flowing into the pockets 10 acts as canceling pressure to lower pressure applied on the groove of the shaft from the side surface 1c. Therefore, the friction between the seal ring 1 and the groove of the shaft is reduced.

A diameter and a thickness of the seal ring 1 can be determined depending on configurations of the shaft and the housing on which the seal ring 1 is mounted. An outer diameter of the seal ring 1 can be 10 mm or more and 200 mm or less, for example. The thickness of the seal ring 1 can be 0.8 mm or more and 3.5 mm or less, for example.

Material of the seal ring 1 is not limited to a particular kind. For example, polyether ether ketone (PEEK), polyphenylene sulfide (PPS), polyimide (PI), polytetrafluoroethylene (PTFE), modified polytetrafluoroethylene, or ethylene tetrafluoroethylene (ETFE) can be used for the material of the seal ring 1. Further, an additive such as carbon powder and carbon fibers may be mixed into the above material for the material of the seal ring 1.

A manufacturing method for the seal ring 1 is not limited to a particular method. For example, the seal ring 1 provided with the pockets 10 can be directly manufactured by injection molding or compression molding. Examples of material suitable for injection molding can include a resin such as PEEK, PPS, and PI. Examples of material suitable for compression molding can include a resin such as PTFE. Further, for example, with the resin such as PTFE, the seal ring 1 may be manufactured by forming the pockets 10 by machining after formation of the seal ring 1.

### 2. Pocket 10

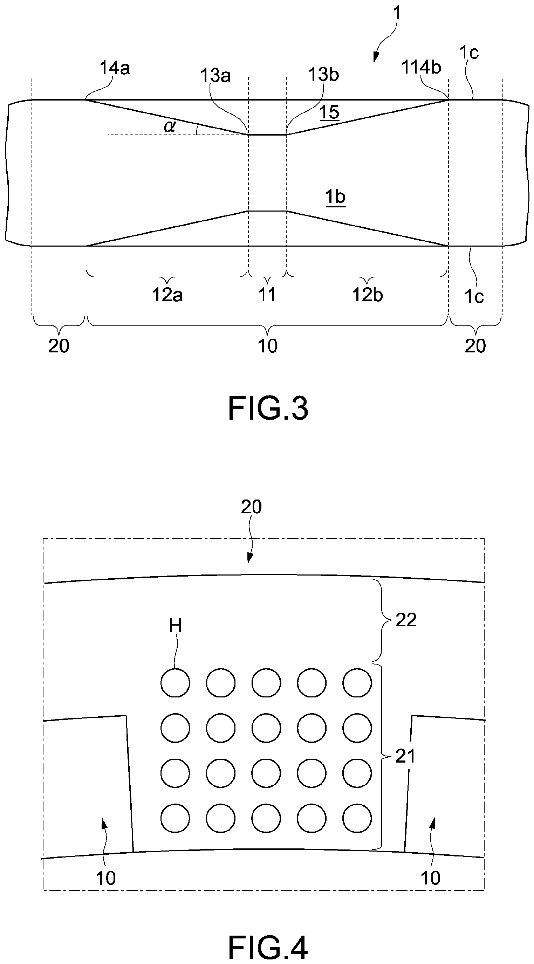

Fig. 2 is a partial, perspective view showing a schematic configuration of the seal ring 1 and shows the pocket 10 in an enlarged state. Fig. 3 is a view showing the pocket 10 of the seal ring 1 as viewed from the inner circumferential surface 1b. Fig. 3 shows a shape along the inner circumferential surface 1b of the seal ring 1.

The pocket 10 is provided in the side surface 1c of the seal ring 1 on a side of the inner circumferential surface 1b. The pocket 10 includes a partition wall 15 between the pocket 10 and the outer circumferential surface 1a of the seal ring 1. The partition wall 15 closes a space on the side of the outer circumferential surface 1a. Therefore, in the seal ring 1, leakage of oil in the pocket 10 toward the outer circumferential surface 1a of the seal ring 1 can be reduced.

On the other hand, the pocket 10 does not include such a partition wall between the pocket 10 and the inner circumferential surface 1b and is opened to the inner circumferential surface 1b of the seal ring 1. This can prevent the oil pressure inside the pocket 10 from being excessively high. Therefore, the leakage of oil in the pocket 10 toward the outer circumferential surface 1a of the seal ring 1 can be effectively reduced.

The partition wall 15 of the pocket 10 is configured as a flat surface orthogonal to the side surface 1c of the seal ring 1. However, the partition wall 15 is not limited to a particular configuration as long as it can isolate an inner space of the pocket 10 from the space on the side of the outer circumferential surface la. Further, the pockets 10 are divided by the above-mentioned column portions 20 in the circumferential direction.

The pockets 10 are formed to be symmetrical in the circumferential direction. Further, the positions and shapes of the pockets 10 in the two side surfaces 1c of the seal ring 1 are set to be symmetrical in a thickness direction of the seal ring 1.

The pocket 10 includes a bottom portion 11 and inclined portions 12a, 12b. The pocket 10 further includes connection portions 13a, 13b and end portions 14a, 14b. The above-mentioned configurations of the pockets 10 are all symmetrical in the circumferential direction.

The bottom portion 11 is a site that is provided in a central region of the pocket 10 in the circumferential direction and a depth thereof from the side surface 1c is largest in the pocket 10. The bottom portion 11 functions as an inflow port of oil irrespective of a direction of rotation of the seal ring 1. The bottom portion 11 is favorably configured as a continuous flat surface, and more favorably configured as a flat surface parallel to the side surface 1c. With this, oil easily flows into the pocket 10, and a sufficient inflow of oil into the pocket 10 can be ensured.

The inclined portions 12a, 12b are provided on both sides of the bottom portion 11 in the circumferential direction. In the example shown in Figs. 2 and 3, the inclined portion 12a is arranged on a right-hand side of the bottom portion 11 and the inclined portion 12b is arranged on a left-hand side of the bottom portion 11. The inclined portions 12a, 12b are each inclined such that a depth thereof from the side surface 1c becomes smaller in a direction away from the bottom portion 11. Each of the inclined portions 12a, 12b forms an angle α with respect to the side surface 1c.

The connection portion 13a, 13b connects the bottom portion 11 to the inclined portion 12a, 12b. The connection portion 13a, 13b is favorably an R-surface having a concave shape. A radius of curvature of the connection portion 13a, 13b is determined such that oil can smoothly flow from the bottom portion 11 to the inclined portion 12a, 12b, for example.

Note that the connection portion 13a, 13b may be formed having a single radius of curvature or may be formed having a continuously-varying radius of curvature. Further, the configuration of the connection portion 13a, 13b is not limited to the R-surface and, for example, may be a C-face or may be a valley line at which the bottom portion 11 intersects the inclined portion 12a, 12b.

The end portions 14a, 14b are arranged at end portions of the pocket 10 in the circumferential direction, and connects the inclined portions 12a, 12b to the side surfaces 1c. The circumferential end portion 14a, 14b is configured as an R-surface having a convex shape. The radius of curvature of the end portion 14a, 14b is determined such that oil passing the end portion 14a, 14b can form an adequate oil film on the side surface 1c, for example. Note that the connection portion 13a, 13b may be formed having a single radius of curvature or may be formed having a continuously-varying radius of curvature.

In the seal ring 1, one of the inclined portions 12a, 12b receives a higher oil pressure in a manner that depends on a direction of rotation relative to the shaft. More specifically, an edge portion in proximity to the end portion 14a, 14b of the inclined portion 12a, 12b receives a particularly higher oil pressure. With this, canceling pressure to lower pressure applied on the groove of the shaft from the side surface 1c is obtained in the seal ring 1.

The inclined portions 12a, 12b are not limited to the above-mentioned configurations, and only need to be capable of receiving the higher oil pressure. For example, the inclined portions 12a, 12b may be configured such that the inclination is varied at two steps. In this case, an angle of the angles of each inclined portion 12a, 12b, which is on a side of the end portion 14a, 14b, can be set to be an angle β smaller than the angle α. With this, it becomes possible to receive the higher oil pressure at the portion of the inclined portion 12a, 12b, which is on the side of the end portion 14a, 14b. Further, the inclined portion 12a, 12b does not need to be a flat surface but may be a curved surface. In this case, the inclined portions 12a, 12b may be a curved surface having a convex or recess shape, for example.

The end portions 14a, 14b mainly function to form an adequate oil film on the side surface 1c corresponding to the column portions 20. As described above, the end portion 14a, 14b is the R-surface having a convex shape. Therefore, the angle of the end portion 14a, 14b with respect to the side surface 1c gradually becomes smaller from the inclined portion 12a, 12b toward the column portion 20. That is, regarding an oil channel formed by the end portions 14a, 14b, the reduction of the opening becomes smaller as it becomes narrower.

This makes it easy for oil passing the inclined portions 12a, 12b to flow deeply into the end portions 14a, 14b without escaping to the inner circumferential surface 1b. In the seal ring 1, oil passing the end portions 14a, 14b forms an adequate oil film on the side surface 1c corresponding to the column portions 20. With this, the friction loss of the seal ring 1 is effectively reduced.

### 3. Recess Region 21

Fig. 4 is a partial, plan view showing a region P surrounded with the long dashed short dashed line of Fig. 1. That is, in Fig. 4, one of the recess regions 21 formed in the side surface 1c corresponding to the column portions 20 is shown in an enlarged state. The recess region 21 includes the recesses H each of which is a hole with a bottom. In each recess region 21, twenty recesses H are arrayed in a 4-by-5 form, spaced apart from one another.

The recess region 21 buffers (temporarily stores) oil passing the end portion 14a, 14b of the pocket 10. That is, depending on the flow of oil, the recess region 21 repeatedly catches the oil in the recesses H and discharges the oil from the recesses H. With this, in the seal ring 1, the thickness of the oil film on the side surface 1c corresponding to the column portions 20 is kept suitable.

That is, in the seal ring 1, even if a small amount of oil passes the end portions 14a, 14b of the pockets 10, oil in the recesses H of the recess regions 21 is discharged, and hence the oil film on the side surface 1c corresponding to the column portions 20 does not become too thin. Therefore, in the seal ring 1, an increase in friction loss is reduced.

Further, in the seal ring 1, even if a large amount of oil passes the end portions 14a, 14b of the pockets 10, the oil is caught in the recesses H of the recess regions 21, and hence the oil film on the side surface 1c corresponding to the column portions 20 does not become too thick. Therefore, in the seal ring 1, the oil leakage can be reduced.

In this manner, in the seal ring 1, even if the amount of oil passing the end portions 14a, 14b of the pockets 10 changes, a change in thickness of the oil film on the side surface 1c corresponding to the column portions 20 is reduced. Therefore, in the seal ring 1, it is possible to both reduce the friction loss and reduce the oil leakage.

The shape of each recess H in the recess region 21 can be appropriately set. Favorably, each recess H can be configured as a circular hole having, for example, a diameter of 10 µm or more and 1 mm or less. In this case, it is favorable that a depth of each recess H is equal to or larger than 10 µm and is equal to or smaller than a depth of the pocket 10.

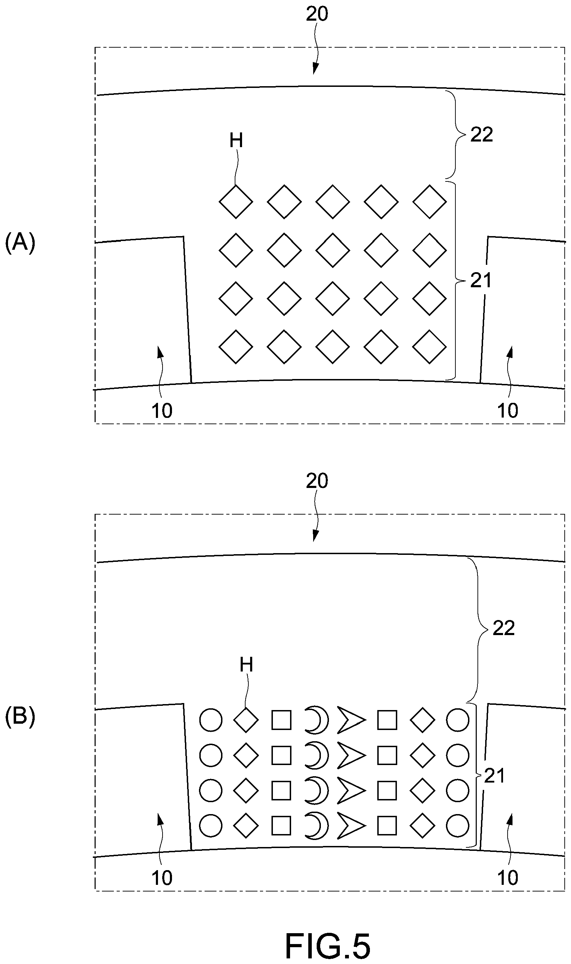

The recess H is not limited to the circular hole, but also may be, for example, a hole having a shape other than the circular shape, such as a rectangular shape, a polygonal shape, an oval shape, and a crescent shape. As an example, the recess H may be configured as a diamond-shaped hole as shown in (A) of Fig. 5. Further, the bottom surface of the recess H may be a flat surface or may be a curved surface.

Further, the number of recesses H and the arrangement of the recesses H in each recess region 21 can also be appropriately set. However, it is favorable that a plurality of recesses H are provided and these recesses H are arranged in at least a region between the pockets 10 adjacent to each other. As an example, the recess region 21 may have a configuration in which recesses H having various shapes are combined and arranged as shown in (B) of Fig. 5.

Moreover, the recess region 21 does not need to have a configuration in which the recesses H are systematically arrayed as shown in Fig. 4, (A) of Fig. 5, and (B) of Fig. 5. That is, in the recess region 21, the recesses H may be randomly dispersed and arranged.

In the seal ring 1, the flat portions 22 in which the recesses H are not formed are provided at the regions of the side surface 1c corresponding to the column portions 20, which are closer to the outer circumferential surface 1a than the recess regions 21. That is, the recesses H are formed in a region excluding the regions of the side surface 1c corresponding to the column portions 20, which are closer to the outer circumferential surface 1a.

If the recesses H are provided in proximity to the outer circumferential surface 1a, oil in the recesses H easily leaks toward the outer circumferential surface 1a. In view of this point, in the seal ring 1, the recesses H are not provided in the flat portions 22 in proximity to the outer circumferential surface 1a, and hence the oil leakage of the oil in the recesses H hardly occurs.

Note that the dimension of the flat portion 22 can be appropriately set. Depending on applications of the seal ring 1, environments where it is used, and the like, recesses of the recesses H, which are closest to the outer circumferential surface 1a, only need to be spaced apart from the outer circumferential surface la. The flat portions 22 do not need to be substantially provided.

Further, it is favorable that the pockets 10 and the recess regions 21 are provided in both the side surfaces 1c in the seal ring 1. With this, in the seal ring 1, the actions of the pockets 10 and the recess regions 21 can be obtained irrespective of which side surface 1c is a seal surface. Therefore, in the seal ring 1 with the pockets 10 and the recess regions 21 provided in both the side surface 1c, it is unnecessary to take care of the direction of mounting on the shaft, and hence the work efficiency is improved.

However, depending on needs, the pockets 10 and the recess regions 21 can also be provided in only one of the two side surfaces 1c of the seal ring 1.

Moreover, the configurations of the pockets 10 of the seal ring 1 according to this embodiment are not limited to those described above but can be variously modified. Hereinafter, modified examples 1, 2 in which the configurations of the pockets 10 of the seal ring 1 according to this embodiment are modified will be described.

### 4. Modified Example 1

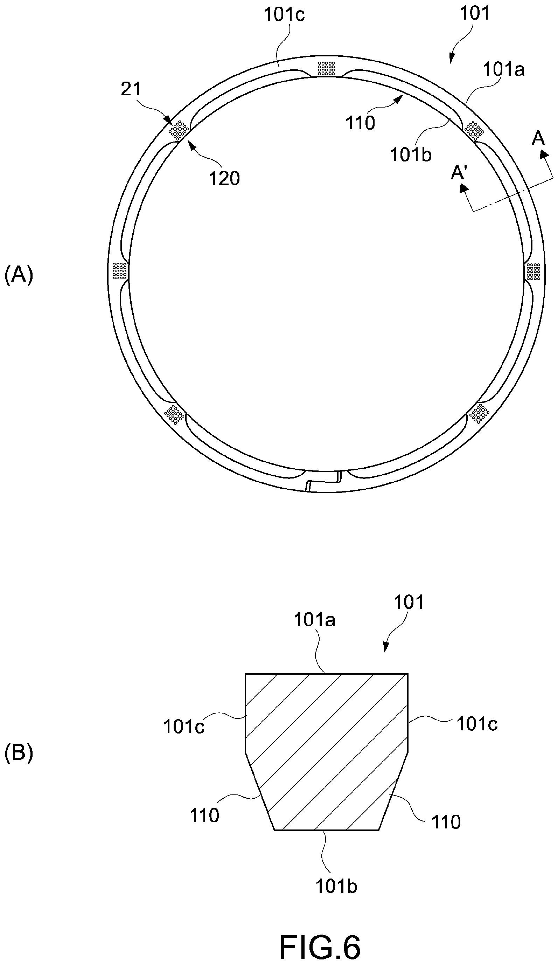

Fig. 6 is a view showing a seal ring 101 according to Modified Example 1 of the above-mentioned embodiment. (A) of Fig. 6 is a plan view of the seal ring 101 and (B) of Fig. 6 is a cross-sectional view of the seal ring 101, which is taken along the line A-A' of (A) of Fig. 6.

The seal ring 101 according to Modified Example 1 is provided with eight pockets 110. Unlike the pocket 10 of the seal ring 1 according to the embodiment, the pocket 110 has inclined surfaces. An inner circumferential surface 101b is connected to side surfaces 101c through the inclined surfaces, respectively. In the seal ring 101, a reduction in the friction loss due to the pockets 110 is achieved while keeping surface contact between the side surface 101c and the groove of the shaft.

Also in the seal ring 101 according to Modified Example 1, a recess region 21 similar to that of the seal ring 1 according to the above-mentioned embodiment is provided in a column portion 120 between the pockets 110. Also in the seal ring 101 according to Modified Example 1, as in the seal ring 1 according to the above-mentioned embodiment, the recess region 21 functions to buffer oil. Thus, it is possible to both reduce the friction loss and reduce the oil leakage.

### 5. Modified Example 2

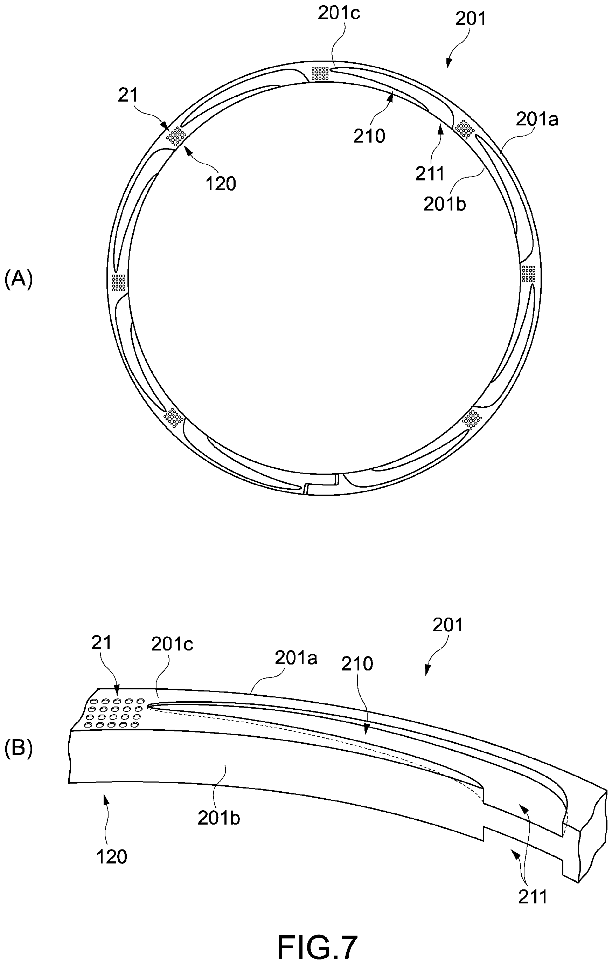

Fig. 7 is a view showing a seal ring 201 according to Modified Example 2 of the above-mentioned embodiment. (A) of Fig. 7 is a plan view of the seal ring 201 and (B) of Fig. 7 is a partial, perspective view showing one of pockets 210 of the seal ring 201 in an enlarged state.

The pocket 210 provided in the seal ring 201 according to Modified Example 2 extends from an inflow port 211 provided in an inner circumferential surface 201b, along a region between an outer circumferential surface 201a and the inner circumferential surface 201b. The pocket 210 is configured such that a width and a depth from a side surface 201c become smaller in a direction away from the inflow port 211.

The seal ring 201 according to Modified Example 2 is configured such that oil flowing into the pocket 210 from the inflow port 211 does not flow out to the inner circumferential surface 201b while the opening of an oil channel is made smaller. The seal ring 201 has a configuration specialized for reducing the friction loss due to the increased oil pressure inside the pocket 210.

Also in the seal ring 201 according to Modified Example 2, a recess region 21 similar to that of the seal ring 1 according to the above-mentioned embodiment is provided in a column portion 220 between the pockets 210. Also in the seal ring 201 according to Modified Example 1, as in the seal ring 1 according to the above-mentioned embodiment, the recess region 21 functions to buffer oil. Thus, it is possible to both reduce the friction loss and reduce the oil leakage.

### 6. Example

### 6.1 Seal Ring 1 According to Example

The seal ring 1 having the configuration of the above-mentioned embodiment was fabricated as Example of the present invention. The outer diameter of the seal ring 1 was set to 51 mm and the number of pockets 10 is set to 12. In each recess region 21, ten recesses H that are circular holes each having a diameter of about 250 µm and a depth of about 20 µm to 30 µm are arranged. Note that configurations of seal rings according to Comparative Examples 1 to 4 to be described later are similar to those of the seal ring 1 according to this Example, excluding configurations to be specially described.

### 6.2 Seal Ring According to Comparative Example 1

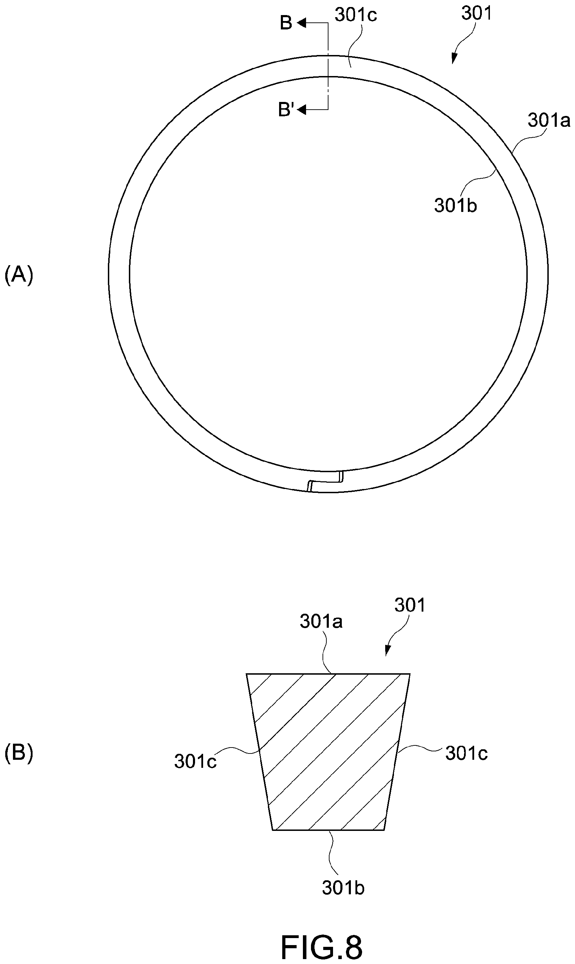

Fig. 8 is a diagram showing a seal ring 301 according to Comparative Example 1 of the present invention. (A) of Fig. 8 is a plan view of the seal ring 301 and (B) of Fig. 8 is a cross-sectional view of the seal ring 301, which is taken along the line B-B' of (A) of Fig. 8.

In the seal ring 301, side surfaces 301c are inclined such that a distance therebetween becomes narrower from an outer circumferential surface 301a to an inner circumferential surface 301b. In the seal ring 301, a reduction in the friction loss is achieved by employing a configuration in which the side surface 301c and the groove of the shaft are not in surface contact with each other.

### 6.3 Seal Ring According to Comparative Example 2

A seal ring according to Comparative Example 2 has a configuration obtained by removing the recess regions 21 from the seal ring 101 according to Modified Example 1 shown in Fig. 6.

### 6.4 Seal Ring According to Comparative Example 3

A seal ring according to Comparative Example 3 has a configuration obtained by removing the recess regions 21 from the seal ring 201 according to Modified Example 2 shown in Fig. 7.

### 6.5 Seal Ring According to Comparative Example 4

The seal ring according to Comparative Example 4 has a configuration obtained by removing the recess regions 21 from the seal ring 1 according to Example 1.

### 6.6 Friction-Loss Evaluation

Friction-loss evaluation using the seal ring 1 according to Example, the seal ring according to Comparative Example 1, the seal ring according to Comparative Example 2, the seal ring according to Comparative Example 3, and the seal ring according to Comparative Example 4 as samples was conducted. For the friction-loss evaluation, measurement for drag torque (N*m) using two of those samples and setting the temperature of oil to 80°C and the oil pressure to 0.5 MPa was conducted. The rotations per minute of each sample in the measurement of drag torque was set to 1000 to 6000 rpm.

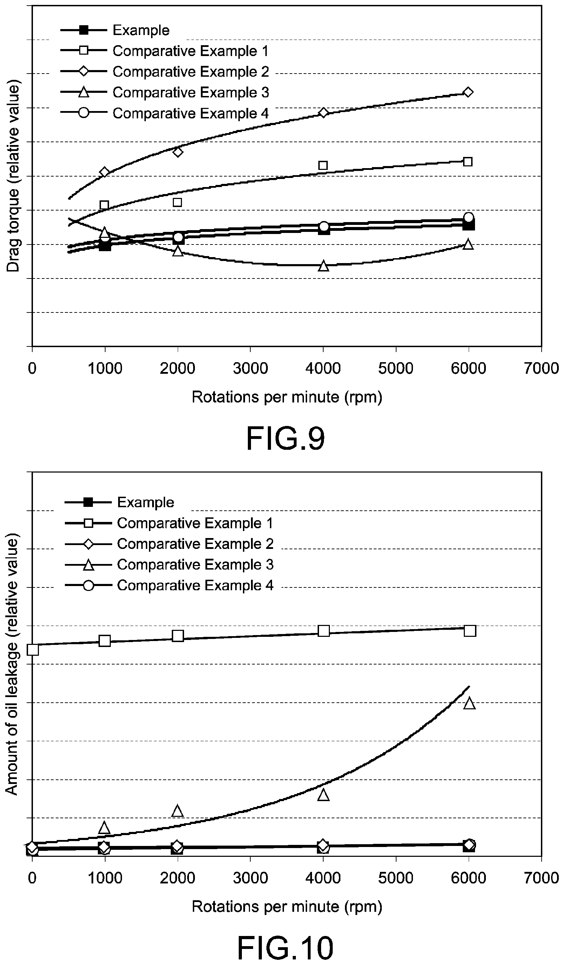

Fig. 9 is a graph showing measurement results of drag torque. The horizontal axis of Fig. 9 represents rotations per minute (rpm) and the vertical axis represents a relative value of the drag torque.

In all of the seal ring 1 according to Example, the seal ring according to Comparative Example 1, the seal ring according to Comparative Example 2, the seal ring according to Comparative Example 3, and the seal ring according to Comparative Example 4, low drag torque was obtained and the friction loss was reduced.

In the seal ring 1 according to Example, the seal ring according to Comparative Example 3, and the seal ring according to Comparative Example 4 among them, it was found that significantly low drag torque was obtained and the friction loss was more effectively reduced.

Further, comparing the seal ring 1 according to Example with the seal ring according to Comparative Example 4, lower drag torque was obtained in the seal ring 1 according to Example at any rotations per minute. With this, it was found that the friction loss is more effectively reduced by providing the column portions 20 with the recess regions 21.

### 6.7 Oil-Leakage Evaluation

Oil-leakage evaluation using the seal ring 1 according to Example, the seal ring according to Comparative Example 1, the seal ring according to Comparative Example 2, the seal ring according to Comparative Example 3, and the seal ring according to Comparative Example 4 as samples was conducted. For the oil-leakage evaluation, measurement of an amount of oil leakage (ml/min) using two of those samples and setting the temperature of oil to 80°C and the oil pressure to 0.5 MPa was conducted. The rotations per minute of each sample in the measurement of an amount of oil leakage was set to 1000 to 6000 rpm.

Fig. 10 is a graph showing measurement results of the amount of oil leakage. The horizontal axis of Fig. 10 represents rotations per minute (rpm) and the vertical axis represents a relative value of the amount of oil leakage.

In all of the seal ring 1 according to Example, the seal ring according to Comparative Example 1, the seal ring according to Comparative Example 2, the seal ring according to Comparative Example 3, and the seal ring according to Comparative Example 4, the amount of oil leakage was small and the oil leakage was reduced.

In the seal ring 1 according to Example, the seal ring according to Comparative Example 2, and the seal ring according to Comparative Example 4 among them, it was found that almost no oil leakage occurred irrespective of the rotations per minute and the oil leakage was more effectively reduced. On the other hand, in the seal ring according to Comparative Example 3, a favorable result was obtained at low rotations per minute, though it was inferior to the seal ring 1 according to Example particularly at high rotations per minute.

Further, a difference in the amount of oil leakage between the seal ring 1 according to Example and the seal ring according to Comparative Example 4 was not found. With this, it was found that the amount of oil leakage is not affected even by providing, the column portions 20 with the recess regions 21.

### 6.8 Conclusions

In the seal ring 1 according to Example, more favorable results were obtained as compared to that of the seal ring according to Comparative Example 1 with regard to both of the friction-loss evaluation and the oil-leakage evaluation.

Further, in the seal ring 1 according to Example, a result comparable to that of the seal ring according to Comparative Example 2 was obtained with regard to the oil-leakage evaluation and a more favorable result was obtained as compared to that of the seal ring according to Comparative Example 2 with regard to the friction-loss evaluation.

Moreover, in the seal ring 1 according to Example, a result comparable to that of the seal ring according to Comparative Example 3 was obtained with regard to the friction-loss evaluation and a more favorable result was obtained as compared to that of the seal ring according to Comparative Example 3 with regard to the oil-leakage evaluation.

In addition, in the seal ring 1 according to Example, a result comparable to that of the seal ring according to Comparative Example 4 was obtained with regard to the oil-leakage evaluation and a more favorable result was obtained as compared to that of the seal ring according to Comparative Example 4 with regard to the friction-loss evaluation.

As described above, in the seal ring 1 according to Example of the present invention, particularly favorable results were obtained with regard to both of the friction-loss evaluation and the oil-leakage evaluation. Consequently, the seal ring 1 is capable of both reducing the friction loss and reducing the oil leakage.

### 7. Other embodiments

Hereinabove, the embodiment of the present invention has been described. The present invention is not limited to the above embodiment but can be variously modified without departing from the gist of the present invention as a matter of course.

As an example, in the present invention, the configuration in which the two side surfaces of the seal ring are provided with the pockets having similar configurations is not essential. For example, only one of the two side surfaces of the seal ring may be provided with the pockets. Further, the two side surfaces of the seal ring may be provided with pockets having different configurations. Moreover, the number of pockets of the two side surfaces of the seal ring may be different.

Further, in the present invention, the configuration in which the two side surfaces of the seal ring are provided with the recess regions having similar configurations is not essential. For example, only one of the two side surfaces of the seal ring may be provided with the recess regions. Further, the two side surfaces of the seal ring may be provided with recess regions having different configurations. Moreover, the number of recesses and the arrangement of the recesses in the recess regions may differ between the two side surfaces of the seal ring.

Moreover, in the present invention, the configuration in which the recesses are formed only in the regions between the pockets is not essential. For example, the recesses may be formed over an entire region other than the pockets of the side surfaces of the seal ring, or that region may constitute a recess region as a whole. In this case, the configurations of the recess regions may be varied between the region on the side of the outer circumferential surface and the region on the side of the inner circumferential surface. For example, in the region on the side of the outer circumferential surface, the size of each recess can be reduced or the number of recesses can be reduced. With this, the amount of oil retained in the region on the side of the outer circumferential surface decreases, and hence the oil leakage toward the outer circumferential surface is reduced. Reference Signs List

- 1: seal ring
- 1a: outer circumferential surface
- 1b: inner circumferential surface
- 1c: side surface
- 10: pocket
- 11: bottom portion
- 12a, 12b: inclined portion
- 13a, 13b: connection portion
- 14a, 14b: end portion
- 15: partition wall
- 20: column portion
- 21: recess region
- 22: flat portion
- 30: joint portion
- H: recess

## Claims

1. A seal ring (1), comprising:
an inner circumferential surface (1b);
an outer circumferential surface (1a) opposed to the inner circumferential surface (1b);
side surfaces (1c) orthogonal to the inner circumferential surface (1b) and the outer circumferential surface (1a);
a plurality of pockets (10) provided, spaced apart from one another in at least one of the side surfaces (1c); each of the plurality of pockets (10) opened on a side of the inner circumferential surface (1b) and closed on a side of the outer circumferential surface (1a);
**characterized in that** the seal ring further comprises:
recess regions (21) provided in the at least one of the side surfaces (1c), arranged between the plurality of pockets (10), and including a plurality of independent recesses.

2. The seal ring (1) according to claim 1, further comprising
flat portions (22) each provided on a side of the outer circumferential surface (1a) with respect to the recess regions (21), the recesses being not provided in the flat portions.

3. The seal ring (1) according to any one of claims 1 or 2, further comprising
a joint portion (30), the recesses being not provided at the joint portion (30).

4. The seal ring (1) according to any one of claims 1 to 3, wherein
each of the recesses is a circular hole having a diameter of 10 µm or more and 1 mm or less and a depth of 10 µm or more, the depth being equal to or smaller than a depth of the pocket (10).

5. The seal ring according to any one of claims 1 to 4, each pocket (10) including
a bottom portion (11) provided at a central region in a circumferential direction,
both end portions in the circumferential direction, which are R-surfaces each having a convex shape and connecting to the at least one of the side surfaces (1c), and
inclined portions each extending between the bottom portion (11) and each of the both end portions.

## Patentansprüche

1. Dichtring (1) aufweisend:
eine innere Umfangsoberfläche (1b);
eine äußere Umfangsoberfläche (1a) gegenüberliegend zu der inneren Umfangsoberfläche (1b);
Seitenoberflächen (1c) senkrecht zu der inneren Umfangsoberfläche (1b) und der äußeren Umfangsoberfläche (1a);
eine Vielzahl von Taschen (10), die mit Abstand zueinander an wenigstens einer der Seitenoberflächen (1c)vorgesehen sind; wobei jede der Vielzahl von Taschen (10) an einer Seite der inneren Umfangsoberfläche (1b) geöffnet und an einer Seite der äußeren Umfangsoberfläche (1a) geschlossen ist;
**dadurch gekennzeichnet, dass** der Dichtring ferner aufweist:
Aussparungsbereiche (21), die in der wenigstens einen der Seitenoberflächen (1c) vorgesehen sind, angeordnet zwischen der Vielzahl von Taschen (10) und umfassend eine Vielzahl von unabhängigen Aussparungen.

2. Dichtring (1) nach Anspruch 1, ferner aufweisend:
flache Abschnitte (22), von denen jeder an einer Seite der äußeren Umfangsoberfläche (1a) bezüglich der Aussparungsbereiche (21) vorgesehen ist, wobei die Aussparungen nicht in den flachen Abschnitten vorgesehen sind.

3. Dichtring (1) nach einem der Ansprüche 1 oder 2, ferner aufweisend:
einen Verbindungsabschnitt (30), wobei die Aussparungen nicht an dem Verbindungsabschnitt (30) vorgesehen sind.

4. Dichtring (1) nach einem der Ansprüche 1 bis 3, wobei
jede der Aussparungen eine kreisförmige Öffnung mit einem Durchmesser von 10 µm oder mehr und 1 mm oder weniger und eine Tiefe von 10 µm oder mehr hat, wobei die Tiefe gleich oder kleiner als die Tiefe der Tasche (10) ist.

5. Dichtring nach einem der Ansprüche 1 bis 4, wobei jede Tasche (10) umfasst:
einen Bodenabschnitt (11), der in einem zentralen Bereich in einer Umfangsrichtung vorgesehen ist,
beide Endabschnitte in der Umfangsrichtung, die R-Oberflächen sind, die eine konvexe Form haben und mit wenigstens einer der Seitenoberflächen (1c) verbunden sind, und
geneigte Abschnitte, die sich jeweils zwischen dem Bodenabschnitt (11) und jedem der zwei Endabschnitte erstrecken.

## Revendications

1. Bague d'étanchéité (1), comprenant :
une surface circonférentielle intérieure (1b) ;
une surface circonférentielle extérieure (1a) opposée à la surface circonférentielle intérieure (1b) ;
des surfaces latérales (1c) orthogonales à la surface circonférentielle intérieure (1b) et à la surface circonférentielle extérieure (1a) ;
une pluralité de poches (10) prévues, espacées les unes des autres dans au moins une des surfaces latérales (1c) ; chacune de la pluralité de poches (10) ouverte sur un côté de la surface circonférentielle intérieure (1b) et fermée sur un côté de la surface circonférentielle extérieure (1a) ;
**caractérisée en ce que** la bague d'étanchéité comprend en outre :
des zones d'évidement (21) prévues dans ladite au moins une des surfaces latérales (1c), disposées entre la pluralité de poches (10), et comprenant une pluralité d'évidements indépendants.

2. Bague d'étanchéité (1) selon la revendication 1, comprenant en outre des
parties plates (22) prévues chacune sur un côté de la surface circonférentielle extérieure (1a) par rapport aux zones d'évidement (21), les évidements n'étant pas prévus dans les parties plates.

3. Bague d'étanchéité (1) selon l'une quelconque des revendications 1 ou 2, comprenant en outre
une partie de joint (30), les évidements n'étant pas prévus au niveau de la partie de joint (30).

4. Bague d'étanchéité (1) selon l'une quelconque des revendications 1 à 3, dans lequel
chacun des évidements est un trou circulaire ayant un diamètre de 10 µm ou plus et de 1 mm ou moins et une profondeur de 10 µm ou plus, la profondeur étant égale à ou inférieure à une profondeur de la poche (10).

5. Bague d'étanchéité selon l'une quelconque des revendications 1 à 4,
chaque poche (10) comprenant
une partie inférieure (11) prévue dans une région centrale dans une direction circonférentielle,
les deux parties d'extrémité dans la direction circonférentielle, qui sont des R-surfaces ayant chacune une forme convexe et se connectant à ladite au moins une des surfaces latérales (1c), et
des parties inclinées s'étendant chacune entre la partie inférieure (11) et chacune des deux parties d'extrémité.
